# EUROPEAN PATENT APPLICATION

(11) **EP 4 808 122 A1**
(43) Date of publication of application: **16.09.2026**
(21) Application number: 25305335.9
(22) Date of filing: 13.03.2025
(51) Int. Cl.: H04N 19/176, H04N 19/186, H04N 19/50, H04N 19/593, H04N 19/70

(54) **FAST LDL DECOMPOSITION FOR MATRIX INVERSION**

(71) Applicant: InterDigital CE Patent Holdings, SAS, 75017 Paris (FR)
(72) Inventor: LO BIANCO, Federico, 35700 RENNES (FR); GALPIN, Franck, 35235 THORIGNE-FOUILLARD (FR); LE PENDU, Mikael, 35700 RENNES (FR); KHERCHOUCHE, Mohammed El Amine, 35510 CESSON-SEVIGNE (FR)
(74) Representative: Interdigital

(57) **Abstract**

A method comprising:
obtaining a block of a picture;
determining parameters of a compression tool, the determining comprising:
obtaining (710) a first matrix and a one-dimensional array of values used in a first matrixial operation representing a linear system to solve to obtain the parameters;
applying (711) a fast LDL decomposition to the first matrix, the fast LDL decomposition allowing obtaining a second matrix (L), the second matrix being lower triangular with diagonal entries equal to one, a plurality of scale and shift elements representative of a third matrix (D), the third matrix being diagonal and a fourth matrix (*L^{T}*), the fourth matrix being a transpose of the second matrix; and,
solving (712) the linear system by sequentially solving a second, a third and a fourth matrixial operations respectively based on the second matrix and the one-dimensional array of values, the plurality of scale and shift elements and the fourth matrix; and
applying the compression tool to predict the block using the parameters.

## Description

### BACKGROUND

The present application is related to the domain of video compression and more precisely, the complexity of some video compression tools using one or more matrix inversions.

To achieve high compression efficiency, video coding schemes usually employ predictions and transforms to leverage spatial and temporal redundancies in a video content. During an encoding, pictures of the video content are divided into blocks of pixels, these blocks being then partitioned into one or more sub-blocks, called original sub-blocks in the following. An intra or inter prediction is then applied to each sub-block to exploit intra or inter picture correlations. Whatever the prediction method used (intra or inter), a predictor sub-block is determined for each original sub-block. Then, a sub-block representing a difference between the original sub-block and the predictor sub-block, often denoted as a prediction error sub-block, a prediction residual sub-block or simply a residual sub-block, is transformed, quantized and entropy coded to generate an encoded video stream. To reconstruct the video, the compressed data is decoded by inverse processes corresponding to the transform, quantization and entropic coding.

While the compression efficiency of video compression methods is greatly improving year after year, this improvement is obtained at the price of a great increase of the computation complexity. Any solution allowing reducing this complexity is therefore welcomed.

Some prediction methods require one or more matrix inversions (or, equivalently, to solve a linear system of equations). Inverting a matrix is a computationally complex operation, which also requires some care due to the requirement of restricting to integer operations.

It is desirable to propose solutions to reduce the complexity of matrix invention which would have a direct impact on the global computation complexity of a video compression method.

### BRIEF SUMMARY

In a first aspect, one or more of the present embodiments provide a method comprising:
obtaining a block of a picture;
determining parameters of a compression tool, the determining comprising:
   obtaining a first matrix and a one-dimensional array of values used in a first matrixial operation representing a linear system to solve to obtain the parameters;
   applying a fast LDL decomposition to the first matrix, the fast LDL decomposition allowing obtaining a second matrix, the second matrix being lower triangular with diagonal entries equal to one, a plurality of scale and shift elements representative of a third matrix, the third matrix being diagonal and a fourth matrix, the fourth matrix being a transpose of the second matrix; and,
   solving the linear system by sequentially solving a second, a third and a fourth matrixial operations respectively based on the second matrix and the one-dimensional array of values, the plurality of scale and shift elements and the fourth matrix; and
   applying the compression tool to predict the block using the parameters;
   wherein the fast LDL decomposition comprises:
      applying a recursive transformation to the first matrix to obtain the second matrix and the plurality of scale and shift elements, the recursive transformation starting at a top left diagonal element of the first matrix and comprising at each recursion:
      fixing a pivot element on a diagonal of the first matrix and storing the pivot element in the form of a scale element and a shift element of the plurality allowing implementing a division by the pivot element;
      zeroing out other elements in a same column of the first matrix below the pivot element via row operations, the zeroing out of each other element comprising a division of the other element by the pivot element implemented using the scale element and the shift element of the plurality;
      storing a result of each division in the second matrix at a position of the divided other element; and,
      inferring some lower left elements of the first matrix using a symmetry of the first matrix.

In an embodiment, at each iteration, responsive to a pivot element is lower than or equal to zero, the pivot element is set to one.

In an embodiment, at each iteration, responsive to a pivot is lower than or equal to a positive value, the pivot element is clipped to the positive value.

In an embodiment, at each iteration, responsive to a pivot element is lower than zero, the scale and shift elements allowing implementing a division by the pivot element are determined using an absolute value of the pivot element, a result of the division by the pivot element being obtained by changing a sign of the division implemented the determined scale and shift elements.

In an embodiment the method further comprises, in at least one iteration, applying a preliminary step of permuting rows and columns on the first matrix to select a pivot element respecting a policy.

In an embodiment, the compression tool is one of a convolutional cross-component model prediction mode, a Regression-based GPM blending prediction mode, a Filtered Intra Block Copy prediction mode, a Regression-based SGPM blending prediction mode, an Enhanced intra TMP prediction mode, a Chroma Fusion improvement based prediction mode, a Gradient linear model with luma value based prediction mode, a Convolutional cross-component model for inter prediction based prediction mode, a Decoder derived CCP mode with fusion candidates based prediction mode, and a Extrapolation filter-based intra prediction mode.

In a second aspect, one or more of the present embodiments provide a device comprising electronic circuitry configured for:
obtaining a block of a picture;
determining parameters of a compression tool, the determining comprising:
   obtaining a first matrix and a one-dimensional array of values used in a first matrixial operation representing a linear system to solve to obtain the parameters;
   applying a fast LDL decomposition to the first matrix, the fast LDL decomposition allowing obtaining a second matrix, the second matrix being lower triangular with diagonal entries equal to one, a plurality of scale and shift elements representative of a third matrix, the third matrix being diagonal and a fourth matrix, the fourth matrix being a transpose of the second matrix; and,
   solving the linear system by sequentially solving a second, a third and a fourth matrixial operations respectively based on the second matrix and the one-dimensional array of values, the plurality of scale and shift elements and the fourth matrix; and
   applying the compression tool to predict the block using the parameters;
   wherein the fast LDL decomposition comprises:
      applying a recursive transformation to the first matrix to obtain the second matrix and the plurality of scale and shift elements, the recursive transformation starting at a top left diagonal element of the first matrix and comprising at each recursion:
      fixing a pivot element on a diagonal of the first matrix and storing the pivot element in the form of a scale element and a shift element of the plurality allowing implementing a division by the pivot element;
      zeroing out other elements in a same column of the first matrix below the pivot element via row operations, the zeroing out of each other element comprising a division of the other element by the pivot element implemented using the scale element and the shift element of the plurality;
      storing a result of each division in the second matrix at a position of the divided other element; and,
      inferring some lower left elements of the first matrix using a symmetry of the first matrix.

In an embodiment, at each iteration, responsive to a pivot element is lower than or equal to zero, the pivot element is set to one.

In an embodiment, at each iteration, responsive to a pivot is lower than or equal to a positive value, the pivot element is clipped to the positive value.

In an embodiment, at each iteration, responsive to a pivot element is lower than zero, the scale and shift elements allowing implementing a division by the pivot element are determined using an absolute value of the pivot element, a result of the division by the pivot element being obtained by changing a sign of the division implemented the determined scale and shift elements.

In an embodiment, the electronic circuitry is further configured to apply a preliminary step of permuting rows and columns on the first matrix to select a pivot element respecting a policy in at least one iteration.

In an embodiment, the compression tool is one of a convolutional cross-component model prediction mode, a Regression-based GPM blending prediction mode, a Filtered Intra Block Copy prediction mode, a Regression-based SGPM blending prediction mode, an Enhanced intra TMP prediction mode, a Chroma Fusion improvement based prediction mode, a Gradient linear model with luma value based prediction mode, a Convolutional cross-component model for inter prediction based prediction mode, a Decoder derived CCP mode with fusion candidates based prediction mode, and a Extrapolation filter-based intra prediction mode.

In a third aspect, one or more of the present embodiments provide a non-transitory information storage medium storing program code instructions for implementing the method of the first aspect.

In a fourth aspect, one or more of the present embodiments provide a computer program comprising program code instructions for implementing the method of the first aspect.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1A describes an example of a context in which following embodiments can be implemented;
FIG. 1B is a block diagram illustrating an example system according to one or more embodiments of the present disclosure;
FIG. 2 illustrates an example of partitioning undergone by an image of pixels of an original video;
FIG. 3 is a block diagram illustrating an example video encoder according to one or more embodiments of the present disclosure;
FIG. 4 is a block diagram illustrating an example video decoder according to one or more embodiments of the present disclosure;
FIG. 5 illustrates a 5-tap spatial filter used in CCCM;
FIG. 6 illustrate a reference area used in CCCM;
FIG. 7 illustrates a method of predicting a block according to an embodiment;
FIG. 8 illustrates a step of determining the parameters of a compression tool; and,
FIG. 9 illustrates a fast LDL decomposition according to an embodiment.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

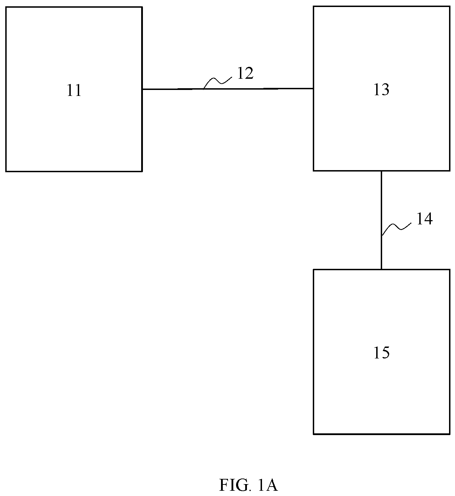

**FIG. 1A** describes an example of a context in which following embodiments can be implemented.

In FIG. 1A, a system 11, that could be a camera, a storage device, a computer, a server or any device capable of delivering a video stream, transmits a video stream to a system 13 using a communication channel 12. The video stream is either encoded and transmitted by the system 11 or received and/or stored by the system 11 and then transmitted. The communication channel 12 is a wired (for example Internet or Ethernet) or a wireless (for example WiFi, 3G, 4G or 5G) network link.

The system 13, that could be for example a set top box, receives and decodes the video stream to generate a sequence of decoded pictures.

The obtained sequence of decoded pictures is then transmitted to a display system 15 using a communication channel 14, that could be a wired or wireless network. The display system 15 then displays said pictures.

In an embodiment, the system 13 is comprised in the display system 15. In that case, the system 13 and display 15 are comprised in a TV, a computer, a tablet, a smartphone, a head-mounted display, etc.

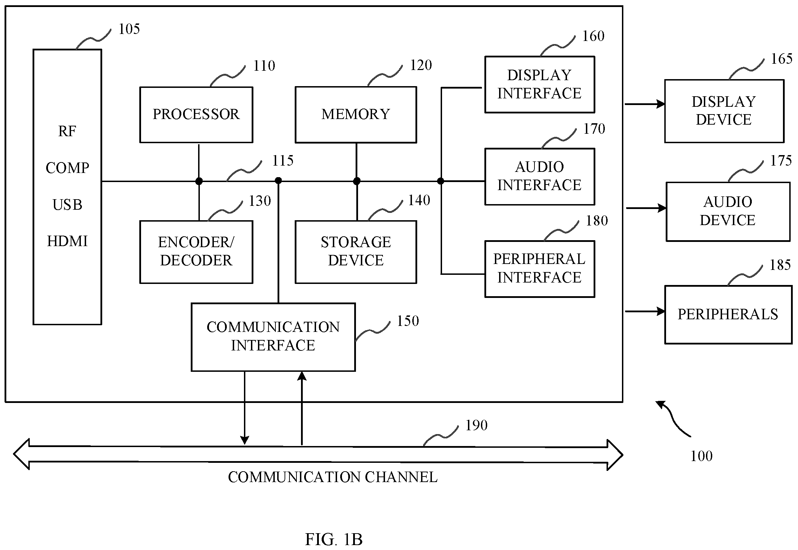

**FIG. 1B** illustrates an example of system 100 implementing the system 11 or the system 13 in which embodiments of the present disclosure can be implemented.

The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces. All these types of processors are electronic circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process raw video data/encoded video data and to provide encoded video data/decoded video data. The encoder/decoder module 130 may include one or more processors and/or memory (not shown). Although FIG. 1B depicts the encoder/decoder module 130 as a separate element of system 100, it will be understood that the processor 110 and the encoder/decoder module 130 may be collocated and/or integrated together as a combination of hardware and/or software, e.g., in an electronic package, circuitry or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input raw video data, reconstructed video data, decoded video data or portions thereof, bitstreams, chunks, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190 (corresponding to communication channel 12 or 14 in FIG. 1A). The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT (Over The Top) services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

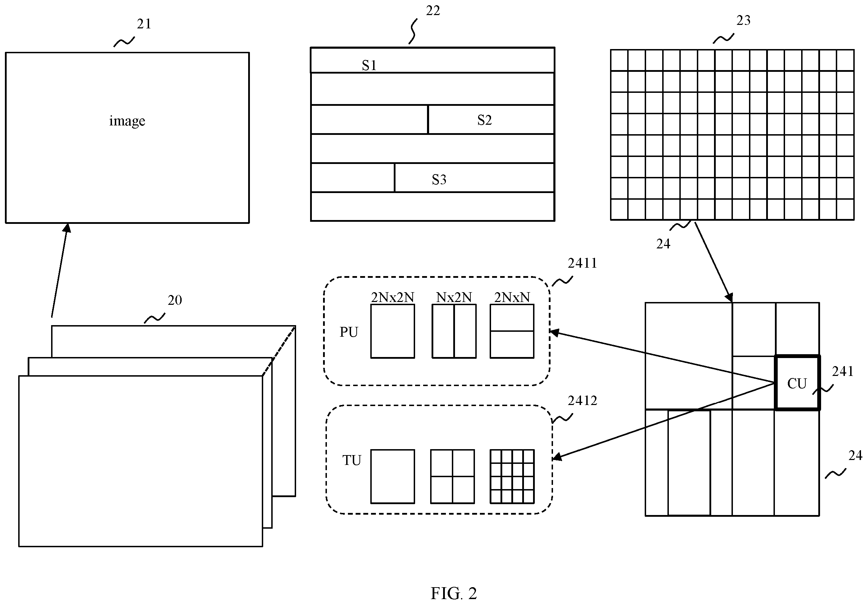

FIGS. 2, 3 and 4 introduce an example of video format.

FIG. 2 illustrates an example of partitioning undergone by a picture of pixels 21 of an original video sequence 20. It is considered here that a pixel is composed of three components: a luminance component Y and two chrominance components U and V (also denoted herein by Cb and Cr). Other types of pixels are however possible comprising less or more components such as only a luminance component or an additional depth component or transparency component.

A picture is divided into a plurality of coding entities. First, as represented by reference 23 in FIG. 2, a picture is divided in a grid of blocks called coding tree units (CTU). A CTU consists of an N×N block of luminance samples together with two corresponding blocks of chrominance samples. N is generally a power of two. Second, a picture is divided into one or more groups of CTU. For example, it can be divided into one or more tile rows and tile columns, a tile being a sequence of CTU covering a rectangular region of a picture. In some cases, a tile could be divided into one or more bricks, each of which consisting of at least one row of CTU within the tile. Above the concept of tiles and bricks, another encoding entity, called slice, exists, that can contain at least one tile of a picture or at least one brick of a tile.

In the example in FIG. 2, as represented by reference 22, the picture 21 is divided into three slices S1, S2 and S3 of the raster-scan slice mode, each comprising a plurality of tiles (not represented), each tile comprising only one brick.

As represented by reference 24 in FIG. 2, a CTU may be partitioned into the form of a hierarchical tree of one or more sub-blocks called coding units (CU). The CTU is the root (i.e. the parent node) of the hierarchical tree and can be partitioned in a plurality of CU (i.e. child nodes). Each CU becomes a leaf of the hierarchical tree if it is not further partitioned in smaller CU or becomes a parent node of smaller CU (i.e. child nodes) if it is further partitioned.

In the example of FIG. 2, the CTU 24 is first partitioned in "4" square CU using a quadtree type partitioning. The upper left CU is a leaf of the hierarchical tree since it is not further partitioned, i.e. it is not a parent node of any other CU. The upper right CU is further partitioned in "4" smaller square CU using again a quadtree type partitioning. The bottom right CU is vertically partitioned in "2" rectangular CU using a binary tree type partitioning. The bottom left CU is vertically partitioned in "3" rectangular CU using a ternary tree type partitioning.

During the coding of a picture, the partitioning is adaptive, each CTU being partitioned so as to optimize a compression efficiency of the CTU criterion.

In HEVC appeared the concept of prediction unit (PU) and transform unit (TU). Indeed, in HEVC, the coding entity that is used for prediction (i.e. a PU) and transform (i.e. a TU) can be a subdivision of a CU. For example, as represented in FIG. 2, a CU of size 2N×2N, can be divided in PU 2411 of size N×2N or of size 2N×N. In addition, said CU can be divided in "4" TU 2412 of size N×N or in "16" TU of size (N/2)×(N/2).

One can note that in VVC, except in some particular cases, frontiers of the TU and PU are aligned on the frontiers of the CU. Consequently, a CU comprises generally one TU and one PU.

In the present application, the term "block" or "picture block" can be used to refer to any one of a CTU, a CU, a PU and a TU. In addition, the term "block" or "picture block" can be used to refer to a macroblock, a partition and a sub-block as specified in H.264/AVC or in other video coding standards, and more generally to refer to an array of samples of numerous sizes.

In the present application, the terms "reconstructed" and "decoded" may be used interchangeably, the terms "pixel" and "sample" may be used interchangeably, the terms "image," "picture", "sub-picture", "slice" and "frame" may be used interchangeably. Usually, but not necessarily, the term "reconstructed" is used at the encoder side while "decoded" is used at the decoder side.

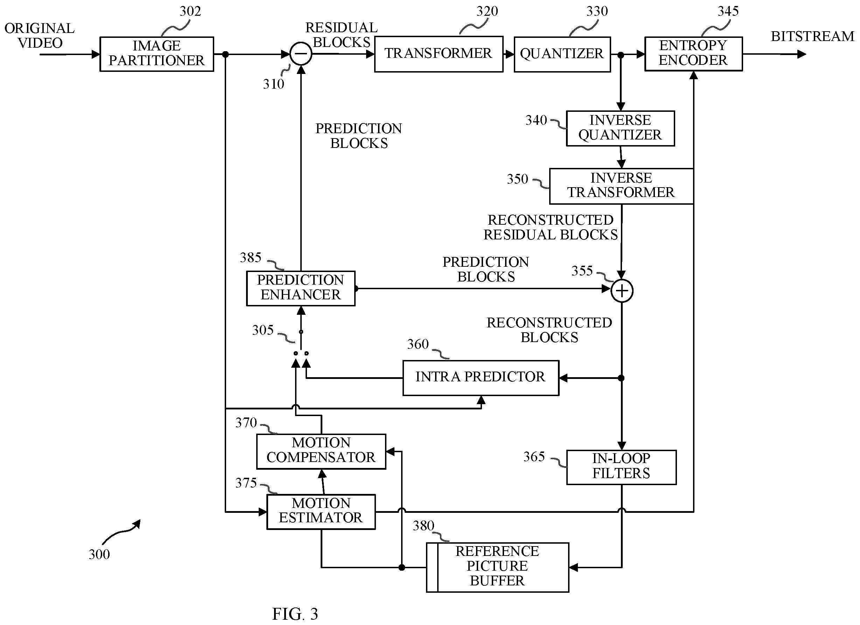

**FIG. 3** is a block diagram illustrating an example video encoder 300 that may be employed by the system 100 (e.g., via the encoder/decoder module 130) described with respect to FIG. 1B. The video encoder 300 may be an encoder that employs video compression technologies, standards, specification, or protocols, including Advanced Video Coding (AVC, ITU-T H.264/MPEG-4), High Efficiency Video Coding (HEVC, ITU-T H.265), Versatile Video Coding (VVC, ITU-T H.266), Essential Video Coding (EVC, MPEG-5), AOMedia Video 1 (AV1), AV2, VP9, or the Enhanced Compression Model (ECM) as described in document JVET-AJ2025: Algorithm description of Enhanced Compression Model 15 (ECM 15) / Joint Video Experts Team (JVET) of ITU-T SG 16 WP 3 *and* ISO/IEC JTC 1/SC 29, 36th Meeting, Kemer, TR, 1-8 November 2024*,* and variations or improvements thereof. Those skilled in the art will understand that the various embodiments described herein are not limited to a specific standard or specification and can be applied to other standards and recommendations, as well as extensions thereof.

Referring generally to FIG. 3 and the video encoder 300, video data (e.g., one or more video pictures) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, a picture to be encoded is partitioned into CUs (blocks, macroblock, CTU, PU, TU, etc) by an picture partitioner 302 as described in relation to FIG. 2.

In general, a block includes a luma block and associated chroma blocks. As such, functions of the video encoder 300 described herein as applied to a block refer generally to the luma block and the respective chroma blocks.

A block may be encoded using an intra prediction mode performed by an intra predictor 360. In intra prediction mode, the content of a block in a picture is predicted based on content from one or more other blocks of the same picture (or region), using reconstructed blocks output from an adder 355.

Intra prediction is applied in All-Intra pictures as well as in intra blocks in Inter pictures, where a target block is spatially predicted from causal neighbor blocks in the same picture, i.e., the blocks on the top and top-right, the blocks on the left and left-bottom, and the top-left block. Based on reconstructed pixel values in these blocks, the encoder constructs different predictions for the target block and chooses the one that leads to the best rate-distortion (RD) performance. In some implementations, the predictions are tested for "67" prediction modes, which include one PLANAR mode (indexed as mode "0"), one DC mode (indexed as mode "1"), and remaining 65 angular modes.

The family of intra prediction modes is continuously evolving with improvements of existing modes or appearance of new modes. These new modes comprise matrix based intra prediction (MIP), template based multiple reference line prediction (TMRL), Decoder side intra mode derivation and fusion (DIMD), template based intra mode derivation and fusion (TIMD), Spatial geometric partition mode (SGPM), Intra template matching (IntraTmp), etc.

The intra prediction modes described above are adapted to an intra prediction in one component (Y or Cb or Cr). Recently, the family of intra prediction modes was enriched by several tools consisting in intra prediction between components of different types.

For example, a Cross-Component Linear Model (CCLM) prediction mode was proposed, for which chroma samples of a CU are predicted based on reconstructed luma samples of the same CU by using a cross-component (CC) prediction model in the form of a linear model as follows: ${pred}_{{C}_{k}} \left(i, j\right) = {α}_{{C}_{k}} ⋅ {rec}_{L} ′ \left(i, j\right) + {β}_{{C}_{k}}$ where pred*_{cₖ}*(i, j) represents a predicted chroma sample of a chroma component *Cₖ* (for example *Cₖ*=U or V for the YUV format) in a CU and res_{L}'(i,j) represents reconstructed luma samples eventually down-sampled depending of the chroma format of the same CU. CCLM parameters *α_{Cₖ}* and β*_{Cₖ}* are derived for each chroma component with a set of neighboring chroma samples of the same chroma component and their corresponding luma samples (eventually down-sampled). In some implementations, a subset of neighboring chroma samples (e.g. at most four) and their corresponding luma samples are used. Also, the position of the neighboring samples may be signaled in the bitstream.

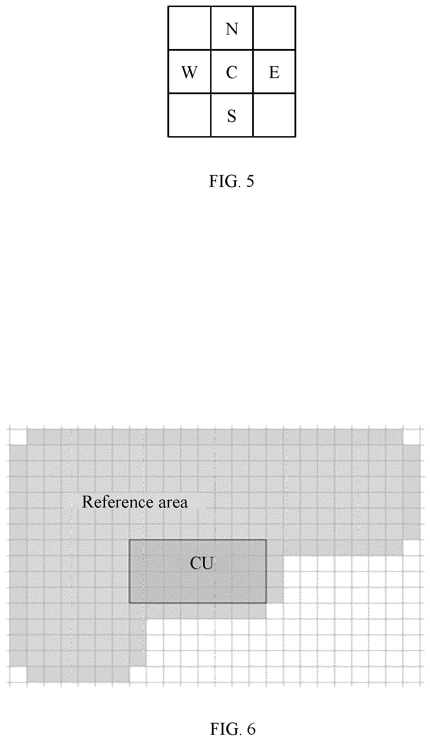

In a variant of CCLM called CCCM (convolutional cross-component model), the linear model of CCLM is replaced by a CC prediction model taking the form of an adaptive 7-Tap convolutional filter. The 7-tap convolutional filter consists of a 5-tap spatial filter component, a nonlinear term *P* and a bias term *B.* The input to the spatial 5-tap spatial filter component consists of down-sampled luma samples comprising a center luma sample *C* which is collocated with a chroma sample to be predicted, a luma sample *N* above the center luma sample *C,* a luma sample S below the center luma sample *C,* a sample *W* on the left of the center luma sample *C* and a sample on the right *E* of the center luma sample *C* as illustrated in **FIG. 5****.** In some variants, some of the inputs may be local gradients (ex: N replaced with (W-E), etc...), and the bias and/or the non-linear terms may be removed.

The nonlinear term *P* is represented as power of two of the center luma sample *C* and scaled to a range of sample values specified by a bit depth value *bitdepth*: $P = \left(C*C+midVal\right) ≫ bitDepth$

That is, for *bitdepth=*10: $P = \left(C*C+512\right) ≫ 10$

Where (>> *a*) represents a binary right shift of *a* bits.

The bias term *B* represents a scalar offset between the input and output and is set to a middle chroma value (for example 512 for *bitdepth=*10)*.*

The predicted chroma samples for a chroma component *Cₖ* (i.e. the output of the 7-tap convolutional filter) is calculated as a convolution between filter coefficients *ci_{Cₖ}* and the input values (the reconstructed luma samples C, N, S, E, W and the non-linear term *P* and the bias *B*) and clipped to the range of valid chroma samples: ${predChromaVal}_{{C}_{k}} = c {0}_{{C}_{k}} . C + c {1}_{{C}_{k}} . N + c {2}_{{C}_{k}} . S + c {3}_{{C}_{k}} . E + c {4}_{{C}_{k}} . W + c {5}_{{C}_{k}} . P + c {6}_{{C}_{k}} . B$

The filter coefficients *ci_{Cₖ}* are calculated by minimizing a MSE (Mean Square Error) between predicted and reconstructed chroma samples in a reference area. **FIG. 6** illustrates the reference area which consists of six lines/columns of chroma samples above and left of the CU. Reference area extends one CU width to the right and one CU height below the CU boundaries. Area is adjusted to include only available samples.

The MSE minimization is performed by calculating an autocorrelation matrix for the luma input and a cross-correlation vector between the luma input and chroma output. The autocorrelation matrix then needs to be inverted. More precisely, one needs to solve a system of linear equations: $S ⋅ x = y$ where S is the autocorrelation matrix and y is known.

In some implementations, the autocorrelation matrix is LDL decomposed and the final filter coefficients are calculated using back-substitution.

A LDL decomposition may be defined as follows:
Given a positive-definite symmetric matrix S, there exists a unique decomposition (called the LDL decomposition) $S = {LDL}^{T}$

Where *L* is lower triangular and with diagonal entries equal to "1", *D* is diagonal with positive diagonal entries, and *L^{T}* denotes the transposed of *L* (which is upper triangular with diagonal entries equal to "1").

An example of algorithm for applying a LDL decomposition is the following:

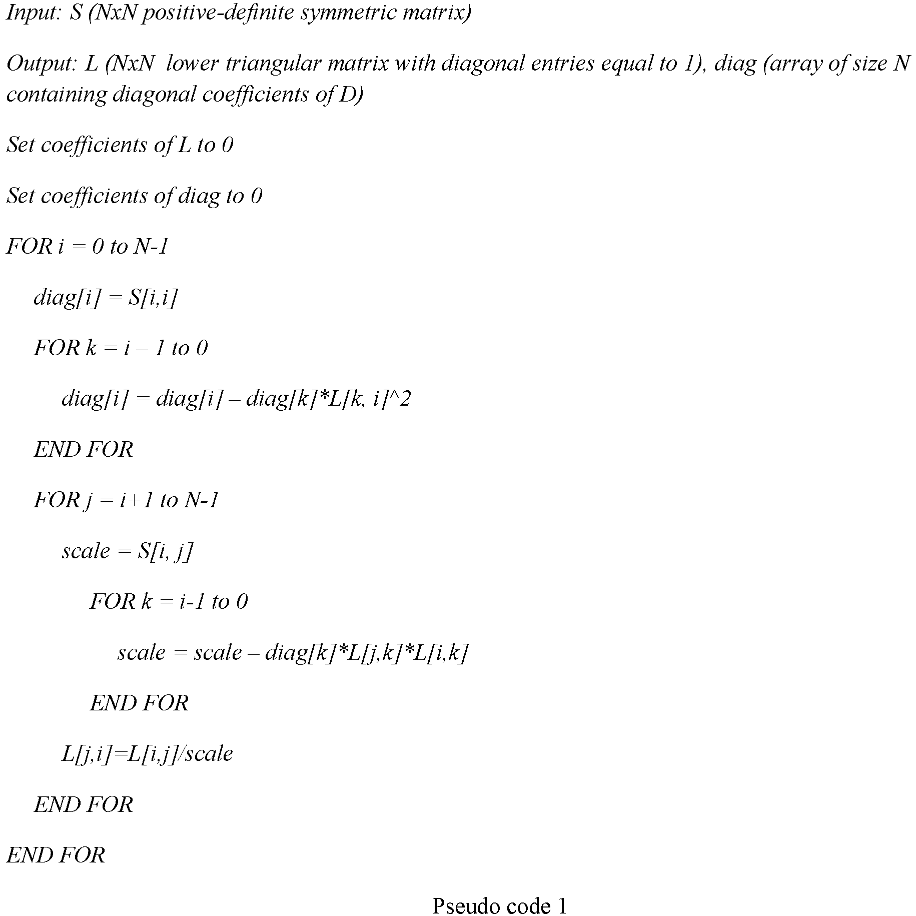

In terms of complexity, this amounts at $\frac{{N}^{3} + 6 \times {N}^{2} - 7 \times N}{3}$ MACs (multiply and accumulation). This includes $\frac{{N}^{2} - N}{2}$ divisions, which require "4" MACs each to be approximated via integer operations.

Once the LDL decomposition for S is computed, a linear system $S ⋅ x = y$ can be solved sequentially as follows with the following three equations: $L ⋅ {x}_{1} = y$ $D ⋅ {x}_{2} = {x}_{1}$ ${L}^{T} ⋅ x = {x}_{2}$

Since *L* is lower triangular with diagonal entries equal to "1", the first and third equations (eq. 3A and eq. 3C) can be solved by forward- and back-substitution respectively (with no need to apply divisions). Since *D* is diagonal, the second equation can simply be solved by dividing each coefficient of *x*₁ by the corresponding diagonal coefficient of *D*. This division can be approximated using only multiplication and bit-shift operations.

In terms of complexity, this amounts to *N*² - 3 × *N* MACs (including *N* divisions, which require "4" MACs each to be approximated via integer operations).

Combined with the LDL decomposition described above, this sums up to $\frac{{N}^{3} + 9 \times {N}^{2} + 2 \times N}{3}$ MACs.

In document JVET-AC0053 (Jani Lainema, Pekka Astola, Alireza Aminlou, Ramin G. Youvalari, AHG12: Simplified linear model solver, Joint Video Experts Team (JVET) of ITU-T SG 16 WP 3 *and* ISO/IEC JTC 1/SC 29, 29th Meeting, by teleconference, 11-20 January 2023*),* it was proposed to replace a LDL decomposition by a simpler method of back substitution based on Gaussian elimination. It is asserted the proposed approach is beneficial in multiple ways: using row-based matrix operations (enabling SIMD/parallel implementation); Smaller amount of arithmetic operations; smaller amount of numbers multiplied together (leading to reduced dynamic range); smaller amount of back-substitutions (leading to reduced latency).

One can note that the method of JVET-AC0053 doesn't use the property of symmetry of the matrix.

The method of JVET-AC0053 may be implemented by the following algorithm:

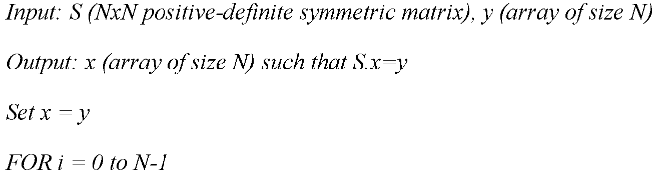

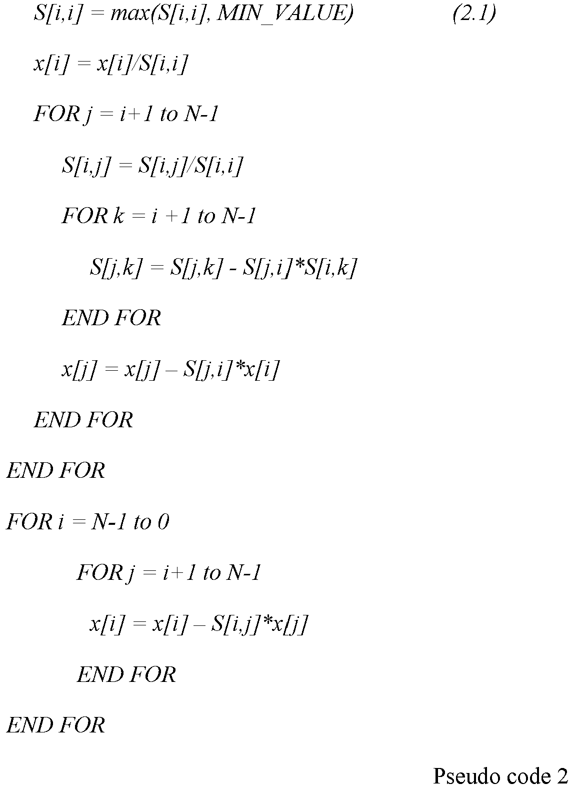

Where *max(a,b)* provides the maximum between *a* and *b* and *MIN*_*VALUE* is a minimum value which can be represented with a chosen bits precision.

In terms of complexity, this algorithm amounts to $\frac{{N}^{3} + 3 \times {N}^{2} + 8 \times N}{3}$ MACs.

One can note that this includes $\frac{{N}^{2} + N}{2}$ divisions. These divisions are implemented in a more efficient way, so that, when dividing several times by the same value, "3" of the "4" necessary operations (MACs) are only performed once. This is done as follows using a function *xGetDivScaleRoundShift.*

The function *xGetDivScaleRoundShift* takes as input a positive integer value *d* (representing a real value at a given precision *p*) and outputs two values *scale* and *shift.* These two values are computed so that, if *n* is another integer value (representing a real value at precision *p*), then the result of the division *n*/*d* can be approximated at precision *p* by the result of (*n*×*scale*)>>*shift.*

One can note that the function *xGetDivScaleRoundShift* may be replaced by a function implementing an exhaustive search testing all possible values of *scale* and *shift* (for shift below a certain threshold, e.g. the precision p and scale below a certain threshold, e.g. ${2}^{\frac{shift}{d}}$) and choosing the best pair of *scale* and *shift* approximating the most accurately division by *d.*

As of document JVET-AJ0237 (Ruoyang Yu, Vadim Seregin, Muhammed Coban, Marta Karczewicz, AHG12: 12-bit internal bit depth for ECM, Joint Video Experts Team (JVET) of ITU-T SG 16 WP 3 *and* ISO/IEC JTC 1/SC 29, 36th Meeting, Kemer, TR, 1-8 November 2024*)* the function *xGetDivScaleRoundShift* also takes the precision *p* as input, so that intermediate computations can potentially be performed at various precisions.

CCCM is not the only tools requiring an inversion of at least one matrix. Several other tools require matrix inversion of positive semi-definite symmetric matrices (or, more precisely, to compute a solution of a linear system *S*.*x*=*y* whose coefficients form a positive-definite symmetric matrix). In ECM, the following tools use the same method as CCCM to perform matrix inversion:
Regression-based GPM blending (as described in document JVET-AG011 (Chuan Zhou, Zhuoyi Lv, Jinrong Zhang, EE2-1.6: On Chroma Fusion improvement, Joint Video Experts Team (JVET) of ITU-T SG 16 WP 3 *and* ISO/IEC JTC 1/SC 29, 29th Meeting, by teleconference, 11-20 January 2023*));*
Filtered Intra Block Copy (FIBC) (as described in doculent JVET-AE0159 (Hong-Jheng Jhu, Xiaoyu Xiu, Che-Wei Kuo, Wei Chen, Ning Yan, Changyue Ma, Xianglin Wang, EE2-2.5: Filtered Intra Block Copy (FIBC), Joint Video Experts Team (JVET) of ITU-T SG 16 WP 3 *and* ISO/IEC JTC 1/SC 29, 31st Meeting, Geneva, 11-19 July 2023*));*
Regression-based SGPM blending (as described in document JVET-AJ0112 (*Xinwei Li*
Ru-Ling Liao, Jie Chen, Yan Ye, EE2-2.15: Regression-based SGPM blending, Joint Video Experts Team (JVET) of ITU-T SG 16 WP 3 *and* ISO/IEC JTC 1/SC 29, 36th Meeting, Kemer, TR, 1-8 November 2024*));*
Enhanced intra TMP (as described in document JVET-AD0086 (Fan Wang et Al., EE2-1.20i/j: Combination of IntraTMP tests, Joint Video Experts Team (JVET) of ITU-T SG 16 WP 3 *and* ISO/IEC JTC 1/SC 29, 30th Meeting, Antalya, TR, 21-28 April 2023*);*
Chroma Fusion improvement (as described in document JVET-AC0119 (Chuan Zhou, Zhuoyi Lv, Jinrong Zhang, EE2-1.6: On Chroma Fusion improvement, Joint Video Experts Team (JVET) of ITU-T SG 16 WP 3 *and* ISO/IEC JTC 1/SC 29, 29th Meeting, by teleconference, 11-20 January 2023*));*
Gradient linear model with luma value (as described in document JVET-AB0092 (Xinwei Li, Yan Ye, Ru-Ling Liao, Jie Chen, EE2-1.8: Gradient linear model with luma value, Joint Video Experts Team (JVET) of ITU-T SG 16 WP 3 *and* ISO/IEC JTC 1/SC 29, 28th Meeting, Mainz, DE, 20-28 October 2022*));*
Convolutional cross-component model for inter prediction (as described in document JVET-AE0059 (Pekka Astola, Jani Lainema, EE2-3.1: Cross-component residual model (CCRM) for inter prediction, Joint Video Experts Team (JVET) of ITU-T SG 16 WP 3 *and* ISO/IEC JTC 1/SC 29, 31st Meeting, Geneva, CH, 11-19 July 2023*));*
Decoder derived CCP mode with fusion candidates (as described in document JVET-AG0154 *(*Vadim Seregin, Jian-Liang Lin, Marta Karczewicz, EE2-1.1: Decoder Derived Cross-Component Prediction, joint Video Experts Team (JVET) of ITU-T SG 16 WP 3 *and* ISO/IEC JTC 1/SC 29, 33rd Meeting, by teleconference, 17 26 January 2024));
Extrapolation filter-based intra prediction mode (EIP) (as described in document JVET-AG0058 (Luhang Xu, Yue Yu, Haoping Yu, Jonathan Gan, Dong Wang, EE2-1.14: An extrapolation filter-based intra prediction mode, Joint Video Experts Team (JVET) of ITU-T SG 16 WP 3 *and* ISO/IEC JTC 1/SC 29, 33rd Meeting, by teleconference, 17 26 January 2024*)).*

Note that in all the above cases, the arrays *x* (unknown term) and y (constant term) have pixel-like elements (i.e. positive values expressed in "8" or "10" bits). The matrices *S* are typically computed as cross-correlation matrices (therefore with twice pixel precision), and possibly shifted to get a different precision, for example "16" bits.

In some recent implementations, intermediate computations are performed in "32" bits precision.

A block may also or alternatively be encoded using an inter prediction mode, in which motion estimation and motion compensation are performed by a motion estimator 375 and a motion compensator 370, respectively. In inter prediction mode, the content of a block in a picture is predicted based on content from one or more reconstructed areas of reference pictures, available from a reference picture buffer (or decoded picture buffer (DPB) 380). A position of the reconstructed area (or reference area) in the reference picture is generally indicated by motion information. The motion information here includes an uni-directional or bi-directional temporal prediction type, a reference picture index within each reference picture list and (a) motion vector(s). Said motion information is used during the motion compensation 370 during which a residual block is calculated in the form of a difference between a predicted block and the reference area. One can note that for blocks predicted using a bi-temporal prediction (i.e., bi-predicted blocks), two reference areas are used to predict the block, each reference area being identified by its own motion information.

Two processes are employed to encode the motion information: AMVP (Adaptive Motion Vector Prediction) or Merge. In each process, the motion vectors are predicted.

Similarly to the family of intra prediction modes, the family of inter prediction modes is continuously evolving an improving.

The video encoder 300 selects or otherwise determines at 305 which prediction mode (intra prediction mode and/or inter prediction mode) to use for encoding a CU. The selection is generally based on a rate/distortion optimization criterion (i.e. RDO criterion). The selected prediction mode may be enhanced (e.g., filtered) by a prediction enhancer 385. Based on the selected mode, a prediction for the CU is generated. A residual block is determined based on the prediction (i.e., prediction block, predicted CU) and the input CU. In some embodiments, such determination is made by a subtractor 310.

The residual block or a partition thereof (e.g., a transform block) is transformed into transform coefficients by a transformer 320. The transform coefficients are quantized by a quantizer 330. An entropy encoder 345 performs entropy encoding of the quantized transform coefficients and coding parameters (e.g., syntax elements including motion vectors and other control data) to form a bitstream of coded video data.

In addition to coding the original video blocks as described herein, the video encoder 300 reconstructs the coded blocks to provide references for future predictions. Thus, quantized transform coefficients (from the quantizer 330) are de-quantized by an inverse quantizer 340, and inverse transformed by an inverse transformer 350, to reconstruct (decode) the residual blocks. The reconstructed residual blocks and prediction blocks are combined (e.g., by the adder 355) to form reconstructed blocks. Thus, the video encoder 300 performs decoding operations through which the encoded images (pictures) are reconstructed.

In-loop filters 365 may be applied to the reconstructed image (formed by the reconstructed blocks). The filtered reconstructed image(s) are stored in the DPB 380 and used by the motion estimator 375 and motion compensator 370, as explained above. The in-loop filters 365 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

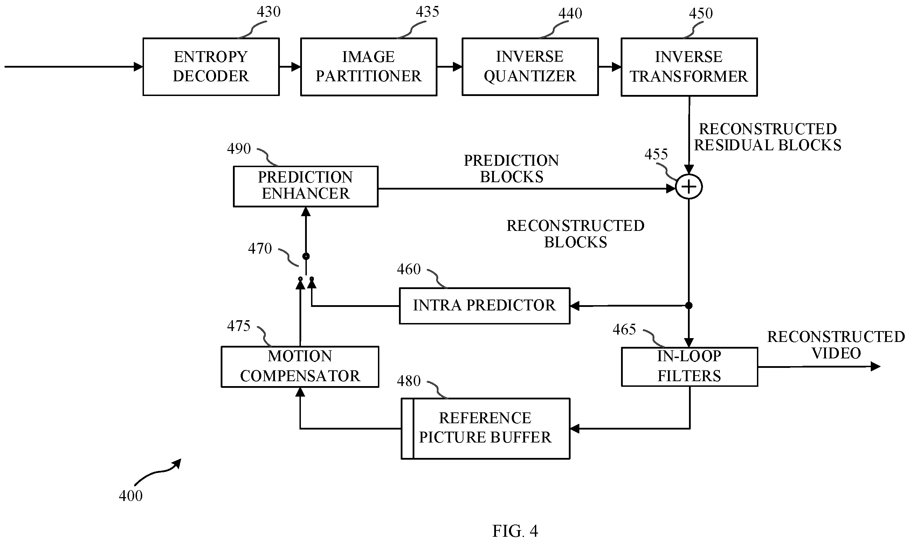

**FIG. 4** is a block diagram illustrating an example of video decoder 400 that may be employed by the system 100 (e.g., via the encoder/decoder module 130) described with respect to FIG. 1B. Generally, operational features of the video decoder 400 are reciprocal to operational features of the video encoder 300. In the video decoder 400, a coded video bitstream (e.g., generated by the video encoder 300 or another video encoding device or process) is entropydecoded by an entropy decoder 430 to obtain transform coefficients, motion vectors, and other coding parameters. Based on the coding parameters, an image partitioner 435 divides the picture accordingly. The quantized transform coefficients are de-quantized by an inverse quantizer 440 and inverse transformed by an inverse transformer 450 to decode (reconstruct) respective residual blocks. Depending on the selected prediction mode, a predicted block can be obtained at 470 from an intra predictor 460 (i.e., intra prediction) or from a motion compensator 475 (i.e., inter prediction) and may be enhanced (e.g., filtered) by a prediction enhancer 490, generating a prediction block. The reconstructed residual blocks are combined with prediction blocks (e.g. by an adder 455), resulting in reconstructed blocks.

In-loop filters 465 (e.g., DBF, BIF, SAO, and/or ALF) can be applied to the reconstructed image (formed by the reconstructed blocks), to output reconstructed (decoded) video. The filtered reconstructed image is also stored in a reference picture buffer 480 for reference by the motion compensator 475.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 3. The post-decoding processor can use metadata derived by the pre-encoding processor and/or signaled in the video bitstream.

As seen above, several tools such as CCCM require a matrix inversion. This is a computationally complex operation, which also requires some care due to the requirement of restricting to integer operations.

The various embodiments described below reduce this complexity while taking account the requirement of restricting to integer operations. It is particularly proposed to modify the process for the inversion of positive-definite symmetric matrices to reduce the complexity. The proposed matrix inversion is based on a fast LDL decomposition, which minimizes the number of operations.

In a variant, the algorithm is modified so that pivot elements are selected via swaps of rows/columns in order to increase a stability of the computations.

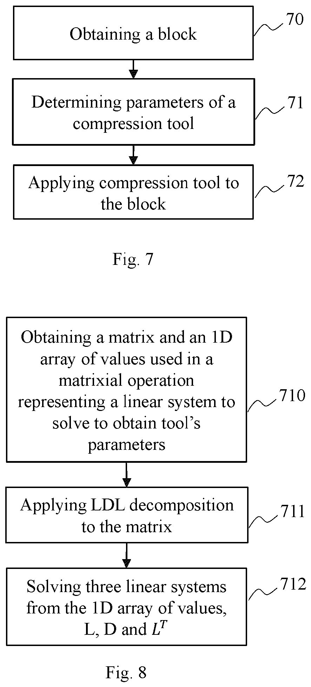

**FIG. 7** illustrates a method of predicting a block according to an embodiment.

The method of FIG. 7 is implemented by the processor 110 implementing an encoder according to FIG. 3 or implementing a decoder according to FIG. 4 modified according to an embodiment or by the encoder module 130 implementing an encoder according to FIG. 3 modified according to an embodiment or by the decoder module 130 implementing a decoder according to FIG. 4 modified according to an embodiment. For simplicity, in the following, we consider that the method of FIG. 7 is implemented by the processor 110.

In a step 70 the processor 110 obtains a block of a picture to predict.

In a step 71, the processor 110 determines parameters of a compression tool. The compression tool is a compression tool requiring an inversion of at least one matrix, the matrix to be inverted being a positive-definite symmetric matrix. In an example, the compression tool is CCCM. Step 71 is detailed in relation to FIG. 8.

In a step 72, the processor 110 applying the compression tool to predict the block using the parameters determined in step 71.

**FIG. 8** illustrates the step 71 of determining the parameters of the compression tool.

In a step 710 the processor 110 obtains a matrix S and a one-dimensional array of values y used in a first matrixial operation representing a linear system to solve to obtain the parameters *x* of the compression tool: $S ⋅ x = y$

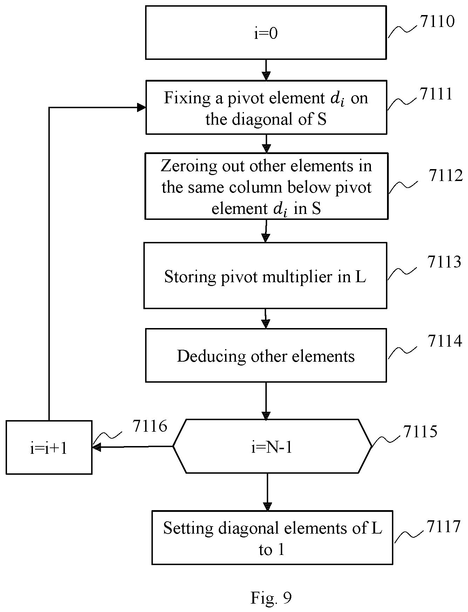

In a step 711 the processor 110 applies a fast LDL decomposition, the fast LDL decomposition allowing obtaining a matrix *L*, the matrix *L* being lower triangular with diagonal entries equal to one, a plurality of scale and shift element representative of the matrix *D,* the matrix being diagonal and a matrix *L^{T},* the matrix *L^{T}* being a transpose of the matrix *L.* Step 711 is detailed in relation to FIG. 9.

In a step 712, the processor 110 solves the linear system by solving sequentially the following three equations eq. 3A, eq. 3B and eq. 3C. Since the matrix *L* is lower triangular with diagonal entries equal to one, equations eq. 3A and eq. 3C may be solved by forward- and back-substitution respectively (with no need to apply divisions). Since the matrix *D* is diagonal, the equation eq. 3B can simply be solved by dividing each coefficient of *x*₁ by a corresponding diagonal coefficient of *D.* This division is implemented using only multiplication and bit-shift operations (as described above). Indeed, the coefficients of the matrix *D* themselves are not used. Indeed, all we need to solve the system are the elements *scale* and *shift* of the plurality of scale and shift elements which allow to approximate division via integer operations.

**FIG. 9** illustrates a fast LDL decomposition according to an embodiment performed in step 711.

The fast LDL decomposition is based on the LU decomposition algorithm. By leveraging the symmetry of the matrix S, the number of required operations is reduced by up to 30% compared to standard LU decomposition. As a reminder a LU decomposition consists in decomposing a matrix S as follows: $S = LU$ where the matrix *L* is lower triangular and *U* is upper triangular (one can note that *L* and *U* are not unique). On can note that the LU decomposition is what we called earlier the "method based on Gaussian elimination".

During the fast LDL decomposition, a recursive algorithm is applied to determine the matrices *D* and *L.*

At each iteration, a pivot element on the diagonal is fixed (starting from the upper left element).

Then the pivot element is used to zero out other elements in a same column than the pivot element but below it (the ones above have already been zeroed out) through row operations (like in Gaussian elimination).

Thanks to the symmetry property of the matrix *S,* the operation to zero out the upper right elements of the matrix D can be deduced from the operation applied on the lower left elements.

Pivot offsets needed to zero out the elements of the matrix S are recorded in the matrix L, which is hence recursively filled out.

Instead of recording the matrix D (whose diagonal elements are only employed to perform a rescaling when solving D.x2=x1), we store the scale and shift parameters which allow to approximate division via integer operations.

In FIG. 9, we suppose that the matrix *S* is N×N.

An examples of matrix *S* is given below. $S = \left(\begin{matrix}2 & 4 & - 2 & 2 \\ 4 & 9 & - 1 & 6 \\ - 2 & - 1 & 14 & 13 \\ 2 & 6 & 13 & 35\end{matrix}\right)$

In a step 7110, the processor 110 initializes a variable *i* to "0". The variable *i* is used to browse the diagonal elements of the matrix *S.* During step 7110, the matrix *L* is initialed to an all zero matrix and arrays *scale[]* and *shift[]* of size *N* are to all zero arrays.

In a step 7111, the processor 110 fixes a pivot element *dᵢ* on the diagonal of the matrix *S.* The pivot (diagonal) element *dᵢ* is stored on the form of a scale *scaleᵢ* (in the array scale[]) and a shift *shiftᵢ* (in the array shift[]) for instance by applying the function *xGetDivScaleRoundShift* to *dᵢ.*

In a step 7112, the processor 110 zeros out other elements in the same column below pivot element in the matrix *S* via row operations. To do so, for each other element in the same column below the pivot element, the processor 110 subtract a pivot offset from the other element. If *S*[*j, i*] is the other element in the same column below pivot element, the other element *S*[*j, i*] is zeroed out as follows: $S \left[j, i\right] = S \left[j, i\right] - {d}_{i} \times \left(S\left[j, i\right]/{d}_{i}\right)$

This operation amounts at multiplying the diagonal element *dᵢ* by a value *S*[*j, i*]/*dᵢ*.

In a step 7113, the processor 110 stores the value *S*[*j, i*]/*dᵢ* in the matrix L at the position [*j, i*]*.* One can note that the operation *S*[*j, i*]/*dᵢ* is implemented as follows: $\left(S\left[j, i\right]\times {scale}_{i}\right) ≫ {shift}_{i}$

During step 7114, the processor 110 infers some lower left elements of the matrix *S* from symmetric elements obtained during the zeroing while applying the line operations without any calculation using the symmetry of the matrix *S.*

One can note that after step 7114, the matrix S is no more the original matrix S but a modified version of the matrix S that is used during the next iterations.

In a step 7715, the processor 110 determines if all diagonal element of the matrix *S* were processed.

If no, the processor 110 goes back to step 7111 via a step 7116 and continues with the next diagonal element of the matrix *S.*

If all diagonal elements of the matrix S were processed, step 7115 is followed by a step 7117.

In step 7117, the processor 110 sets all diagonal elements of the matrix *L* to "1".

As a reminder, in the fast LDL decomposition of FIG. 9, the matrix D (and its diagonal elements *dᵢ*) is never recorded but only the scale *scaleᵢ* and shift *shiftᵢ* corresponding to the diagonal elements *dᵢ* are stored which allow approximating the division via integer operations.

Below, we provide an example of application of the fast LDL decomposition to the matrix $S = \left(\begin{matrix}2 & 4 & - 2 & 2 \\ 4 & 9 & - 1 & 6 \\ - 2 & - 1 & 14 & 13 \\ 2 & 6 & 13 & 35\end{matrix}\right)$

The matrices *L* and *D* are initialized as follows: $L = \left(\begin{matrix}1 & 0 & 0 & 0 \\ ? & 1 & 0 & 0 \\ ? & ? & 1 & 0 \\ ? & ? & ? & 1\end{matrix}\right) ; D = \left(\begin{matrix}2 & 4 & - 2 & 2 \\ 4 & 9 & - 1 & 6 \\ - 2 & - 1 & 14 & 13 \\ 2 & 6 & 13 & 35\end{matrix}\right)$

In the following, the entries in **bold** in the matrix *D* came for free by symmetry and didn't need to be calculated. The entries in **bold** in the matrix *L* come from dividing the column by the pivot element, as in the usual LU decomposition.

In a first iteration, the first column (then first row) is cleared by adding a suitable multiple of the first row to each successive row (-2 times the first row to be added to the second row, 1 times the first row to be added to the third and -1 times the first row to be added to the fourth): $L = \left(\begin{matrix}1 & 0 & 0 & 0 \\ 2 & 1 & 0 & 0 \\ - 1 & ? & 1 & 0 \\ 1 & ? & ? & 1\end{matrix}\right) ; D = \left(\begin{matrix}2 & 0 & 0 & 0 \\ 0 & 1 & 3 & 2 \\ 0 & 3 & 12 & 15 \\ 0 & 2 & 15 & 33\end{matrix}\right)$

Note that, as discussed earlier, bold coefficients in D can be deduced from the upper right part thanks to symmetry, and need not be computed directly. Similarly, elements of the first row can be set to 0 with no computation needed.

In a second iteration, the second column (then second row) is cleared: $L = \left(\begin{matrix}1 & 0 & 0 & 0 \\ 2 & 1 & 0 & 0 \\ - 1 & 3 & 1 & 0 \\ 1 & 2 & ? & 1\end{matrix}\right) ; D = \left(\begin{matrix}2 & 0 & 0 & 0 \\ 0 & 1 & 0 & 0 \\ 0 & 0 & 3 & 9 \\ 0 & 0 & 9 & 29\end{matrix}\right)$

In a third iteration, the third column (then third row) is cleared: $L = \left(\begin{matrix}1 & 0 & 0 & 0 \\ 2 & 1 & 0 & 0 \\ - 1 & 3 & 1 & 0 \\ 1 & 2 & 3 & 1\end{matrix}\right) ; D = \left(\begin{matrix}2 & 0 & 0 & 0 \\ 0 & 1 & 0 & 0 \\ 0 & 0 & 3 & 0 \\ 0 & 0 & 0 & 2\end{matrix}\right)$

So, the fast LDL decomposition provide: $S = {LDL}^{T}$ with: $L = \left(\begin{matrix}1 & 0 & 0 & 0 \\ 2 & 1 & 0 & 0 \\ - 1 & 3 & 1 & 0 \\ 1 & 2 & 3 & 1\end{matrix}\right) and D = \left(\begin{matrix}2 & 0 & 0 & 0 \\ 0 & 1 & 0 & 0 \\ 0 & 0 & 3 & 0 \\ 0 & 0 & 0 & 2\end{matrix}\right)$

In the above example, even if the matrix *D* is represented, it is not actually computed but only the scale *scaleᵢ* and shift *shiftᵢ* corresponding to the diagonal elements *dᵢ* (i.e., 2, 1, 3 and 2) are stored.

In the following, an example of pseudo code implementing the fast LDL decomposition is proposed:

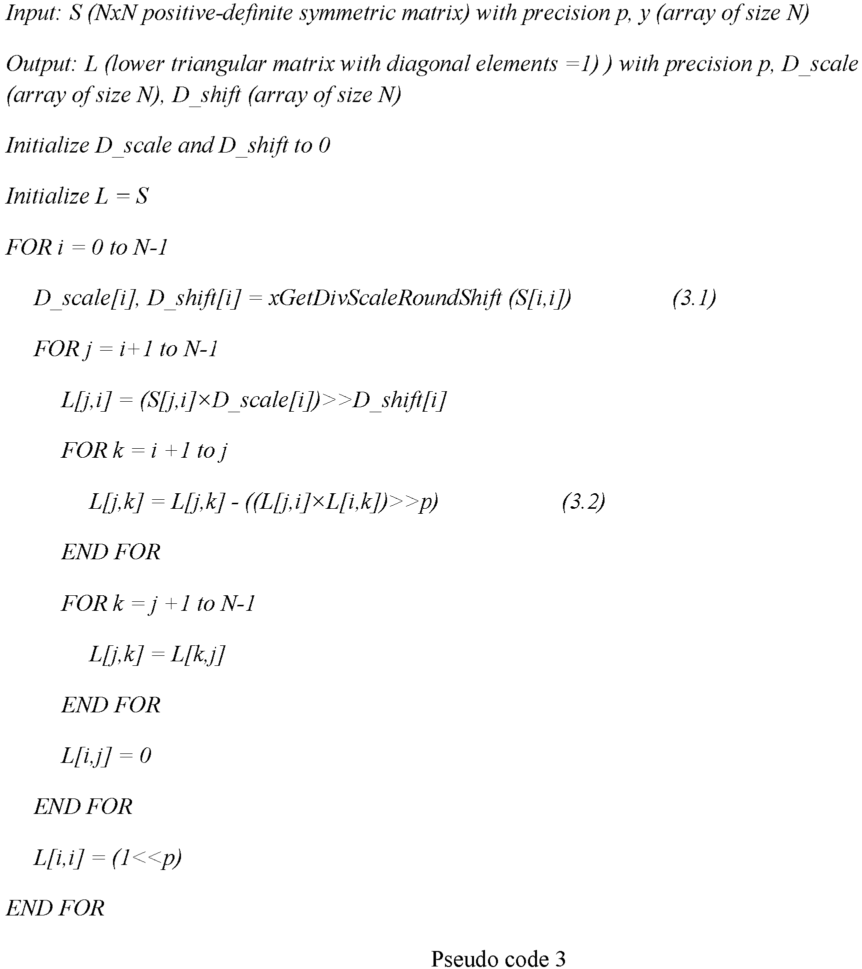

Note that in step (3.1) in the pseudo code, the function *xGetDivScaleRoundShift* may be replaced by a function implementing an exhaustive search.

Mathematically, the pivot element *S[i,i]* (corresponding to *dᵢ*) should be guaranteed to be positive. However, because of finite precision operations, it may occur that *S[i,i]* is <=0. Such situation may by simply handled by replacing *S[i,i]* by "1" (which in practice represents the real number ½*^{p}*, where *p* is the precision of the coefficients of the matrix *S*). However this may result in division by a very small number, which may cause computational instability and overflow errors.

In a variant, it is proposed to clip to a positive value all pivot elements below the positive value in order to reduce computational instability.

In another variant, it is proposed to handle negative pivot elements by taking their sign into account. In the case of *S[i,i]* <0 we would compute the scale and shift elements using, for example, *xGetDivScaleRoundShift* (*-S[i,i]*) and then approximate n/ *S[i,i]* by -(n×scale)>>shift.

At step (3.2), the mathematical operation L[j,k] = L[j,k] - L[j,i]×L[i,k] uses an additional shifting operation which ensures that all terms have precision*p*.

Similarly, the step L[i,i]=(1<<p) corresponds, in precision *p*, to setting L[i,i] to "1".

This fast LDL decomposition (including computing scale and shift values) requires $\left(\frac{{N}^{3} + 3 \times {N}^{2} + 14 \times N}{6}\right)$ MACs.

Having precomputed the scale and shift for diagonal coefficients division, solving the system requires only *N*² additional MACs (instead of *N*²+3*N* as above), for a total of $\left(\frac{{N}^{3} + 9 \times {N}^{2} + 14 \times N}{6}\right)$ MACs.

Table TAB1 provides number of MACs for typical values of *N*:

**Table TAB1**

| | MACs for regular LDL | MACs for Gaussian elimination | MACs for fast LDL (including system solution) |
|---|---|---|---|
| N=3 | 38 | 26 | 25 |
| N=6 | 184 | 124 | 104 |
| N=7 | 266 | 182 | 147 |
| N=10 | 640 | 460 | 340 |
| N=11 | 814 | 594 | 429 |
| N=15 | 1810 | 1390 | 935 |

A variant to handle non-positive pivot elements is detailed below. **In** this variant, we employ a technique of pivoting to enhance computational stability. When solving linear systems via Gaussian elimination, it is well known that row/column swapping to choose better pivot elements can lead to better computational stability and may even be necessary if zero pivot elements (i.e., pivot elements equal to zero) are encountered in the process.

In current implementation, pivot elements equal to "0" are handled by setting them to the minimal representable value at chosen precision (step (2.1) in pseudo code 2).

In this variant, we propose instead to apply at each iteration a preliminary step of permuting rows and columns (both at the same time to preserve symmetry) on the matrix S to select the best pivot element according to a specified policy. It may be the greatest element in absolute value, in order to avoid dividing by small numbers or the median/closest to mean element, in order to preserve the magnitude of values.

For example, let us consider a matrix $S = \left(\begin{matrix}0.01 & 0 & 0.08 & 0.5 \\ 0 & 2 & 0 & 1 \\ 0.08 & 0 & 1 & - 1 \\ 0.5 & 1 & - 1 & 100\end{matrix}\right)$

Without pivoting, the first pivot element would be "0.01". Dividing by "0.01" means multiplying by "100", which can be detrimental to the stability of the algorithm. One pivoting strategy is for example be to take the greatest diagonal element (i.e. "100") as a pivot element. To do so, we permute the first and fourth rows and the first and fourth columns, so that the matrix S is changed to $S = \left(\begin{matrix}100 & 1 & - 1 & 0.5 \\ 1 & 2 & 0 & 0 \\ - 1 & 0 & 1 & 0.08 \\ 0.5 & 0 & 0.08 & 100\end{matrix}\right)$ after which the LDL algorithm is carried out as explained above (storing shift and scale for the pivot element "100", zero out first row and column and store multiplier). Another pivoting strategy might be to take a pivot element which approximates the median value of the diagonal elements, e.g. the second diagonal element. In this case, the first and second rows and the first and second columns are swapped, so that the matrix S becomes $S = \left(\begin{matrix}2 & 0 & 0.01 & 1 \\ 0 & 0.01 & 0.08 & 1 \\ 0 & 0.08 & 1 & - 1 \\ 1 & 0.5 & - 1 & 100\end{matrix}\right)$ In this case, the permutations should also be recorded and considered when solving the linear system.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. **In** some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:
obtaining (70) a block of a picture;
determining (71) parameters of a compression tool, the determining comprising:
obtaining (710) a first matrix and a one-dimensional array of values used in a first matrixial operation representing a linear system to solve to obtain the parameters;
applying (711) a fast LDL decomposition to the first matrix, the fast LDL decomposition allowing obtaining a second matrix (L), the second matrix being lower triangular with diagonal entries equal to one, a plurality of scale and shift elements representative of a third matrix (D), the third matrix being diagonal and a fourth matrix (*L^{T}*), the fourth matrix being a transpose of the second matrix; and,
solving (712) the linear system by sequentially solving a second, a third and a fourth matrixial operations respectively based on the second matrix and the one-dimensional array of values, the plurality of scale and shift elements and the fourth matrix; and
applying (72) the compression tool to predict the block using the parameters;
wherein the fast LDL decomposition comprises:
applying a recursive transformation to the first matrix to obtain the second matrix and the plurality of scale and shift elements, the recursive transformation starting at a top left diagonal element of the first matrix and comprising at each recursion:
fixing (7111) a pivot element on a diagonal of the first matrix and storing the pivot element in the form of a scale element and a shift element of the plurality allowing implementing a division by the pivot element;
zeroing out (7112) other elements in a same column of the first matrix below the pivot element via row operations, the zeroing out of each other element comprising a division of the other element by the pivot element implemented using the scale element and the shift element of the plurality;
storing (7113) a result of each division in the second matrix at a position of the divided other element; and,
inferring (7114) some lower left elements of the first matrix using a symmetry of the first matrix.

2. The method of claim 1 wherein, at each iteration, responsive to a pivot element is lower than or equal to zero, the pivot element is set to one.

3. The method of claim 1 wherein, at each iteration, responsive to a pivot is lower than or equal to a positive value, the pivot element is clipped to the positive value.

4. The method of claim 1 wherein, at each iteration, responsive to a pivot element is lower than zero, the scale and shift elements allowing implementing a division by the pivot element are determined using an absolute value of the pivot element, a result of the division by the pivot element being obtained by changing a sign of the division implemented the determined scale and shift elements.

5. The method of claim 1 comprising, in at least one iteration, applying a preliminary step of permuting rows and columns on the first matrix to select a pivot element respecting a policy.

6. The method of any previous claim wherein the compression tool is one of a convolutional cross-component model prediction mode, a Regression-based GPM blending prediction mode, a Filtered Intra Block Copy prediction mode, a Regression-based SGPM blending prediction mode, an Enhanced intra TMP prediction mode, a Chroma Fusion improvement based prediction mode, a Gradient linear model with luma value based prediction mode, a Convolutional cross-component model for inter prediction based prediction mode, a Decoder derived CCP mode with fusion candidates based prediction mode, and a Extrapolation filter-based intra prediction mode.

7. A device comprising electronic circuitry configured for:
obtaining (70) a block of a picture;
determining (71) parameters of a compression tool, the determining comprising:
obtaining (710) a first matrix and a one-dimensional array of values used in a first matrixial operation representing a linear system to solve to obtain the parameters;
applying (711) a fast LDL decomposition to the first matrix, the fast LDL decomposition allowing obtaining a second matrix (L), the second matrix being lower triangular with diagonal entries equal to one, a plurality of scale and shift elements representative of a third matrix (D), the third matrix being diagonal and a fourth matrix (*L^{T}*), the fourth matrix being a transpose of the second matrix; and,
solving (712) the linear system by sequentially solving a second, a third and a fourth matrixial operations respectively based on the second matrix and the one-dimensional array of values, the plurality of scale and shift elements and the fourth matrix; and
applying (72) the compression tool to predict the block using the parameters;
wherein the fast LDL decomposition comprises:
applying a recursive transformation to the first matrix to obtain the second matrix and the plurality of scale and shift elements, the recursive transformation starting at a top left diagonal element of the first matrix and comprising at each recursion:
fixing (7111) a pivot element on a diagonal of the first matrix and storing the pivot element in the form of a scale element and a shift element of the plurality allowing implementing a division by the pivot element;
zeroing out (7112) other elements in a same column of the first matrix below the pivot element via row operations, the zeroing out of each other element comprising a division of the other element by the pivot element implemented using the scale element and the shift element of the plurality;
storing (7113) a result of each division in the second matrix at a position of the divided other element; and,
inferring (7114) some lower left elements of the first matrix using a symmetry of the first matrix.

8. The device of claim 7 wherein, at each iteration, responsive to a pivot element is lower than or equal to zero, the pivot element is set to one.

9. The device of claim 7 wherein, at each iteration, responsive to a pivot is lower than or equal to a positive value, the pivot element is clipped to the positive value.

10. The device of claim 7 wherein, at each iteration, responsive to a pivot element is lower than zero, the scale and shift elements allowing implementing a division by the pivot element are determined using an absolute value of the pivot element, a result of the division by the pivot element being obtained by changing a sign of the division implemented the determined scale and shift elements.

11. The device of claim 7 wherein the electronic circuitry is further configured to apply a preliminary step of permuting rows and columns on the first matrix to select a pivot element respecting a policy in at least one iteration.

12. The device of any previous claim from claim 7 to 11 wherein the compression tool is one of a convolutional cross-component model prediction mode, a Regression-based GPM blending prediction mode, a Filtered Intra Block Copy prediction mode, a Regression-based SGPM blending prediction mode, an Enhanced intra TMP prediction mode, a Chroma Fusion improvement based prediction mode, a Gradient linear model with luma value based prediction mode, a Convolutional cross-component model for inter prediction based prediction mode, a Decoder derived CCP mode with fusion candidates based prediction mode, and a Extrapolation filter-based intra prediction mode.

13. Non-transitory information storage medium storing program code instructions for implementing the method of any previous claim 1 to 6.

14. A computer program comprising program code instructions for implementing the method of any previous claim 1 to 6.
